(19) 

**Europäisches Patentamt**
**European Patent Office**
**Office européen des brevets**

(11)  **EP 3 848 420 A1**

(12)  # EUROPEAN PATENT APPLICATION

(43) Date of publication:
**14.07.2021  Bulletin 2021/28**

(21) Application number: **20150937.9**

(22) Date of filing: **09.01.2020**

(51) Int Cl.:
*C09D 5/02* (2006.01)          *C09D 5/24* (2006.01)
*C09D 7/40* (2018.01)          *C09D 11/52* (2014.01)
*H01B 1/24* (2006.01)          *C01B 32/19* (2017.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(71) Applicant: **EMPA Eidgenössische
Materialprüfungs- und
Forschungsanstalt
CH-8600 Dübendorf (CH)**

(72) Inventors:
• **Abdolhosseinzadeh, Sina
  8600 Dübendorf (CH)**
• **Heier, Jakob
  8052 Zürich (CH)**
• **Nüesch, Frank
  8602 Wangen (CH)**

(74) Representative: **Kasche & Partner
Bühlstrasse 1
8125 Zollikerberg/Zürich (CH)**

(54) **HOMOGENEOUS EMULSIONS AND SUSPENSIONS OF 2-DIMENSIONAL MATERIALS**

(57)    The present invention is directed to a deep metastable emulsion (DME) and a stable viscous and homogenous sterically stabilized suspension (SSS) of two-dimensional materials (2DM), and a method for preparing these, optionally without and a stable viscous and homogenous sterically stabilized suspension (SSS) of 2DM two-dimensional materials (2DM), wherein the DME, SSS and their methods for preparation do not require a compound selected from the group consisting of functionalized 2DM, surfactants, and binders that interacts with the 2DM to the extent that the compound is necessary for DME or SSS formation and/or stability. The present invention also relates to the use of DME and SSS for the production of products selected from the group consisting of inks, inks for printed electronics, 3D printing, fabrication of electronic devices, structural composites, coatings, paintings, conductive electrodes, batteries, flow batteries, supercapacitors, solar cells, fuel cells, detectors, sensors, drug delivery, photocatalytic purifications, thermal conductors, thermal barriers, and microwave shields. Depending on the 2DM the DME and SSS have particular utility as conductors, semiconductors or insulators in electronic devices.

EP 3 848 420 A1

## Description

The present invention is directed to a deep metastable emulsion (DME) and a stable viscous and homogenous sterically stabilized suspension (SSS) of two-dimensional materials (2DM), and a method for preparing these, wherein the DME, SSS and their methods for preparation do not require a compound selected from the group consisting of functionalized 2DM, and additives such as surfactants and binders that interact with the 2DM to the extent that the compound is necessary for DME or SSS formation and/or stability. The present invention also relates to the use of DME and SSS for the production of products selected from the group consisting of inks, inks for printed electronics, inks for 3D printing, electronic devices, structural composites, coatings, paintings, conductive electrodes, batteries, flow batteries, supercapacitors, solar cells, fuel cells, detectors, sensors, drug delivery devices, thermal conductors, thermal barriers, and microwave shields. Depending on the particular 2DM material the DME and SSS have particular utility as conductors, semi-conductors or insulators in electronic devices.

## Background of the invention

Two-dimensional materials, also referred to as single-layer materials, are crystalline materials consisting of a single layer of atoms in case of mono-elemental materials or two, three or more atomic layers in case of multi-element materials. In practice, few- and multilayers are also considered as 2DMs. These materials have many applications such as in photovoltaics, electronic devices and water purification. 2DMs are generally categorized as either 2D allotropes of various elements or compounds (consisting of two or more covalently bonding elements). The elemental 2D materials generally carry the -ene suffix in their names, e.g. graphene, while the compounds have -ane or -ide suffixes, e.g. stanene and hexagonal borocarbonitrides (hBN). Some 700 2DMs have been predicted to be stable and many remain to be synthesized (see Mounet et al., Nature Nanotechnology, 13: 246-252, 2018, including supplemental information, 1-274). The global market for 2D materials is expected to reach US$390 million by 2025, mostly for graphene, in the semiconductor, electronics, battery energy and composite materials markets.

2DMs can be produced by delamination (exfoliation) of their parent crystals, e.g. graphene from graphite. Liquid phase exfoliation (LPE) is a simple and high yield method for this purpose but it suffers from two main drawbacks. The concentration of the exfoliated materials is usually lower than the required values for subsequent applications such as e.g. ink for printing or use as additive for composite production, and the exfoliation liquids are often not suitable for subsequent applications.

These problems have been addressed by various methods such as filtration (Sun et al., Journal of Materials Chemistry A, 4(18), 6886-6895), evaporation of the solvent (Pan et al., Nature communications, 9(1), 5197), and ultracentrifugation (Finn et al., Journal of Materials Chemistry C, 2(5), 925-932) but so far, none of them proves practical. Filtration-based methods are very slow because 2DMs materials usually clog filter pores because of their layered structure. Evaporation-based methods, either in vacuum or in air, are not energy efficient mainly because the best exfoliation solvents feature very high boiling points, e.g. NMP. The yield of ultracentrifugation is low, and the production capacity usually cannot exceed few milligrams. The only "potentially" promising method so far is disclosed in US20170081537A1, US20180086932A1, WO2017035193A1, J. Am. Chem. Soc. 2010, 132, 50, 17661-17663, and The Journal of Physical Chemistry Letters, 4(8), 1347-1351. It is used by Sigma Aldrich to produce inks (Product Number: 793663-5ML). In this prior art method graphene is dispersed in a solvent together with a cellulosic binder and subsequently an aqueous sodium chloride solution is added to flocculate the graphene-binder mixture because the binder is not soluble in water. In an alternative process the dispersing solvent and binder are contacted with a hydrophobic solvent that dissolves the binder and by addition of water the graphene-binder mixture is transferred to the hydrophobic solvent. The cellulosic binder has a key role in these methods. It initiates the extraction process and transfers the graphene to the hydrophobic phase. However, the binder imparts serious drawbacks on the graphene-binder mixture because it drastically decreases the electrical conductivity and exposed surface area of the printed traces of graphene which, for example, is vital for energy storage applications, e.g. supercapacitors. A remedy for the negative binder effects is heat treatment at a minimum of 250°C to 300°C, which severely limits the applications for these inks.

The objective technical problem underlying the present invention is the provision of improved solvent compositions comprising two-dimensional materials (2DM), preferably compositions that are suitable for the liquid application of the 2DMs such as coating and printing, in particular printing, 3D printing and screen print, preferably for producing electronic devices.

The above objective is solved by providing a method for preparing a deep metastable emulsion (DME) of a two-dimensional material (2DM), comprising the steps of:

(I) dispersing a 2DM in a solvent X, wherein solvent X comprises water or is miscible in water;
(II.1) adding and mixing a further solvent Y, wherein solvent Y is immiscible in solvent Z and miscible in solvent X; or
(II.2) adding and mixing a further solvent Y, wherein at least one of solvents X and/or Y comprises further solvent T, wherein solvent T is miscible in solvent X and solvent Y, and solvent Y is immiscible in water and immiscible in solvent X but wherein solvent Y in combination with solvent T is miscible in solvent X;

(IIIB) adding and mixing solvent Z if solvent X does not comprise or does not comprise enough solvent Z for DME formation;

wherein

a. the composition resulting from step (II.1), (II.2) or (III) forms a three-phase system having a deep metastable emulsion (DME) middle phase comprising the 2DM; and

b. the deep metastable emulsion (DME) middle phase remains stable at room temperature and atmospheric pressure for at least 1 week.

For example, when solvent Z is water, the method of the invention will comprise the steps of

(I) dispersing a 2DM in a solvent X, wherein solvent X comprises water or is miscible in water;

(II.1) adding and mixing a further solvent Y, wherein solvent Y is immiscible in water and miscible in solvent X; or

(II.2) adding and mixing a further solvent Y, wherein at least one of solvents X and/or Y comprises further solvent T, wherein solvent T is miscible in solvent X and solvent Y, and solvent Y is immiscible in water and immiscible in solvent X but wherein solvent Y in combination with solvent T is miscible in solvent X;

(III) adding and mixing water if solvent X does not comprise or does not comprise enough water for DME-formation.

It was surprisingly found that the methods of the present invention for the preparation of DME-, SSS- and ink products of the present invention do not require the presence of functionalized 2DMs or additives such as surfactants and/or binders that interact with the 2DMs in these products for DME-, SSS- or ink formation and/or stability. The methods and products can be reproduced for essentially all two-dimensional materials and do not require any specific solvent system or an additional agent or compound for triggering the phase separation for DME- and/or SSS formation and stability. It is the differences in the solvents' solubilities that leads to the accumulation of 2DM in the middle phase and to the formation of the DME in a reproducible manner. The stable DME can then be used directly or optionally processed to provide improved products.

The term "two-dimensional material" or its abbreviation "2DM", as used herein throughout the description and claims, is understood to encompass at least one or more "two-dimensional materials" or its abbreviation "2DMs", e.g. 2DM encompassing mono or multiatomic layered materials exfoliated into single or multilayers for practicing the present invention. For a review on current 2DM for use in the method of the present invention reference is made to Mounet et al., Nature Nanotechnology, 13: 246-252, 2018, including supplemental information, 1-274, which is included herein in its entirety by reference. Specific examples of 2DM are given further below.

The term "deep metastable emulsion (DME) of two-dimensional materials (2DM)", as used herein, defines a stable middle phase of 2DM in a three-phase solvent system that keeps the 2DM(s) emulsified under normal conditions (room temperature, e.g. 16 to 28, about 21°C, and about atmospheric pressure) for a long period of time (e.g. at least one, two, three weeks or more than 1 month) because of a big activation energy barrier. The three phases form an equilibrium with solvent exchange depending on the solvent composition and the 2DM in the system. The middle phase will comprise solvents of each phase. Optionally, even after removal of the upper and lower solvent phases the middle phase DME will strive towards an equilibrium with three phases. Furthermore, a DME of the present invention is characterized in that it does not require the presence of functionalized 2DM or additives such as surfactants and/or binders that interact with the 2DM for DME-, SSS- or ink formation and/or stability. Functionalized 2DM relate to 2DM materials with non-native atoms or molecules added during a chemical treatment of the pristine 2DM or its mother crystal (e.g. graphene oxide, MXenes with -OH terminal groups). Additives can be binders and/or surfactants that may interact with 2DMs to form and/or stabilize a 2DM-based emulsion such as cetrimonium bromide (CTAB), octyl phenol ethoxylate (Triton x-100), sodium dodecyl sulfate (SDS), sodium dodecylbenzenesulfonate (SDBS). Optionally, the methods of the present invention are practiced without functionalized 2DMs or additives, and the products are free of these.

When practicing the method of the present invention the total surface energy of the three-phase system decreases upon DME formation, i.e. destabilization and emulsion formation and the following conditions of equation 1 are met:

$$\sigma_{BT} \geq |\sigma_{TG} - \sigma_{BG}| \qquad \text{(equation 1)}$$

wherein $\sigma_{BT}$, $\sigma_{BG}$ and $\sigma_{TG}$ are the surface tensions between bottom phase and top phase solvents, bottom phase solvent and 2DM, and top phase solvent and 2DM, respectively. It is practically difficult to determine the exact values for $\sigma_{BG}$ and $\sigma_{TG}$, but the validity of equation 1 for the three-phase system prepared according to the present invention can be optionally verified by a simple experiment as follows:

In absence of a 2DM, mixing solvents X, Y, Z (and T) as described in steps (I), (II.1), (II.2) and (III) will lead to formation of an emulsion and subsequent phase separation. After complete phase separation, a two-phase system with two clear top and bottom parts will be obtained. One phase will be Z rich (more than 50 vol.% Z) and the other phase will be Y rich (more than 50 vol.% Y). Now if a small amount of 2DM in solvent X (e.g. about 1 vol.% of total volume) is added and mixed with the already formed two phase systems, after stopping the mixing, two scenarios are conceivable:

1st Scenario: 2DM will move to one of the top or bottom phases which means that the conditions of the equation 1 is not met.

2nd Scenario: DM will stay in the interface of two top and bottom phases which means that the conditions of equation 1 is met.

The only reason for restricting the volume of the added 2DM in solvent X is that excess addition of solvent X can interfere with the stability of the already formed two-phase system.

The terms "immiscible" and "miscible", as used herein, are to be interpreted as understood by a skilled person with the common general knowledge in mind. For example, for water-immiscibility a water-immiscible solvent may be any solvent featuring a solubility of equal or less than about 100 g/L in water, for example, less than 50, 40, 30, 20 or 10 g/L at room temperature. Optionally, the immiscibility of non-aqueous solvent systems, e.g. NMP and toluene, also features a solubility of equal or less than about 100, 50, or 10 g/L of one solvent in the other, e.g. less than 10 g/L of NMP in decane and vice versa.

The DME prepared according to the present invention is stable and can be subjected to many further processing steps for producing a high diversity of 2DM-based or 2DM-comprising products.

In one embodiment, the method of the present invention may comprise at least one further step selected from the group consisting of

(a) separating the DME phase (middle phase) from the one or two further phases, optionally by filtration, centrifugation and/or decanting; and/or

(b) addition of one or more solvents (mutual solvent) suitable for dissolving all liquid components of the DME phase, but not suitable for re-dispersing the 2DM; and/or

(c) separating the 2DM from the homogenous solvent produced in step (b) by filtration, centrifugation and/or decanting; re-addition of the mutual solvent and its subsequent removal for further purification of the 2DM,

(c1) if the final carrier solvent for the 2DM has a higher boiling point than the mutual solvent, the 2DM obtained from step (c) is added to the desired amount of the carrier solvent and the residuals of the mutual solvent are evaporated,

(c2) if the final carrier solvent for the 2DM has a lower boiling point than the mutual solvent, the 2DM obtained from step (c) is washed by the target solvent multiple times, for example, by repetitive addition of the target solvent and its removal by filtration, centrifugation and/or decanting.

Optionally, step (c2) can also be used for higher boiling point carrier solvents instead of (c1).

The term "mutual solvent", as used above and herein, refers to a solvent which can dissolve all the liquid components of the emulsion and form a single liquid phase. For example, the mutual solvent is optionally a low boiling point solvent such as ethanol.

The product of the purification of the DME prepared according to the present invention is a "2DM concentrate" which is storage-stable and suitable for a variety of applications, e.g. as paints and inks.

By adjusting the concentration of the DME, in particular, of a "2DM concentrate" of the present invention to above a specific value of a minimum concentration which is called gel (forming) point and will be described below, a sterically stabilized suspension (SSS) is obtained. Hence, the method of the present invention may optionally comprise the further step of adjusting the concentration of the DME to obtain a gel that forms a viscous, homogenous, single phase and sterically stabilized suspension (SSS) of the 2DM from the DME phase.

While SSS has no additive and is only composed of the 2DM and the solvent (or solvent mixtures), to further improve the properties of printed and/or coated layers, an organic salt, soluble in the carrier solvent(s) such as methylammonium iodide, methylammonium chloride, and methylammonium bromide can be added. This salt will improve the adhesion and will either improve the electrical properties or not affect them.

For adapting and improving the properties of the SSS, the method of the present invention may optionally comprise the further step of applying any type of gentle low shear stress, in particular, an oriented low shear stress, to the SSS, for example, by pushing through capillaries, or by means of shearing disks, plates and/or mills, leading to a an improved viscous, homogenous, and single-phase suspension of the 2DM.

The term "gentle low shear stress", as used herein, is defined as any shear stress which is meant for improving the homogeneity and not for dispersion or exfoliation of 2DMs. For example, a single pass of a three roll mill treatment is enough for improving the homogeneity of the obtained 2DM concentrates. Another example of gentle low shear stress treatment is similar to what art painters do when they mix different colors with a palette knife on their palette to mix and make new colors.

It was found that when the concentration of well exfoliated 2DM (few layer) in the carrier solvent of a DME is increased to higher than a critical value, an additive free gel of 2DM will be obtained (SSS) that can be used in various applications such as printing and coating.

It was experimentally verified that after a gentle low shear treatment the 2DM-based SSS gels of the present invention turn into an improved homogenous, single-phase and stable suspension. For example, the alignment of the 2DM in the gel structure by repetitive back and forth shear rate sweeps can stabilize viscosity variations (by shear rate) in the SSS. Even after allowing an SSS product (ink 1 in the examples) to rest for 30 min., and repeating the rheological testing, the viscosity level and stress levels were in the same range (not recovered to the high initial level).

Almost all dispersions are viscoelastic materials, meaning that they exhibit both viscous and elastic properties and, hence, unlike Hookean and Newtonian materials, have complex shear moduli (Modulus of rigidity). The complex modulus ($G^*$) has two components, loss modulus ($G''$) and storage modulus ($G'$) which are related to the viscous (liquid-like) and elastic (solid-like) behavior of the material, respectively. The damping factor is the ratio between $G''$ and $G'$ ($G''/G'$) and is used to determine whether a material behaves as a sol (solution) or as a gel at each specific shear stress. Under normal temperature and pressure conditions gels feature a damping factor smaller than 1 and a damping factor of 1 corresponds to the sol-gel transition point, above which the material flows and acts as a liquid (sol). Gels also possess yield strength, a stress level below which the deformation is linear and completely elastic, i.e. gels will return to their initial shape after removal of the force. The strain level above which a gel starts to deform non-elastically is called the critical strain level ($\gamma_{cr}$) which is an important characteristic property of a gel. The cohesive energy density is a measure of the elastic strength of the material. As the elastic strength is basically a measure of the strength of the internal structure, the higher the cohesive energy density ($E_c$), the more stable a system is. Hence, to study and compare the strength of gels, one can probe the cohesive energy density which is calculated as follows:

$$E_c = \int_0^{\gamma_{cr}} G'\gamma d\gamma = \frac{1}{2}G'\gamma_{cr}^2 \text{ (since G' is constant from 0 to } \gamma_{cr})$$

As a result, gels with larger $G'$ and $\gamma_{cr}$ are stronger and more stable ($\gamma_{cr}$ has a greater effect). As formation of a gel and its strength is also directly related to the volume fraction of the solid component in the dispersion (Langmuir 2008, 24, 14, 7565-7572), in principle, specific cohesive energy density can be probed and compared (instead of the cohesive energy density).

SSS gels prepared according to the present invention composed only of pure 2D material and pure solvent exhibit unexpectedly impressive elastic properties. Even at low concentrations (e.g. 6 to 7 wt.%) critical strains of above 1-2 % and yield stresses of above 100 Pa are easily attainable, e.g. for graphene-NMP ink. Other SSS inks also exhibit similar properties. Without wishing to be bound by theory it is assumed that van der Waals (vdW) attractions between 2DM nanosheets are responsible for this outstanding elastic behavior of the gels. The vdW attractions seem to act as springs between nanosheets and at low stress levels impart elasticity to the SSS gels. When a shear stress above the yield stress is applied, these springs seem to break down and the rheological behavior is dominated by the solvent phase between the nanosheets; once the stress is removed, the vdW attractions are regenerated and the SSS gels regain their elasticity almost immediately. This surprising rheological behavior of 2DM compositions of the present invention renders these SSS gels perfect for 3D printing applications.

The critical solid volume fraction above which a stable gel can be obtained is called gel point ($\Phi_{gel}$). This means that a specific SSS solid phase can only host a specific amount of solvent and after that the structure will break down and again the rheological behavior will be sol-dominated. Highly concentrated dispersions feature only ink properties if their concentration is more than or equal to the gel point concentration. This is probably because the film formation behavior of an SSS ink is related to the elastic behavior domination of these viscoelastic suspensions. In other words, to obtain a continuous film after application of a sterically stabilized ink to a substrate of interest until its drying, the damping factor preferably remains less than one. Otherwise the solvent may carry aggregated particles along its flow.

In a further embodiment the method of the present invention is one, wherein the 2DM-carrier solvent mixture of the SSS has a 2DM concentration equal or more than 0.5, 1, 2, 3, or 4; equal or more than 5, 6, 7, or 9, optionally equal or more than 10 or 20 wt.-%.

In another embodiment the method of the present invention is one, wherein the SSS has a viscosity at room temperature (16 - 28, optionally about 20 °C) in the range of 250 cP to 250000 cP, 700 cP to 10000 cP, or in the range of 2000 cP to 7000 cP.

The method of the present invention also provides for SSS, wherein the 2DM particles in the SSS essentially do not sediment at room temperature, preferably 16 to 28 or about 20°C, and about atmospheric pressure for at least 24, 36 or 72 hours if not further manipulated. The term "essentially" in this context means that less than 5%, 1%, or 0.1 wt.% of the 2DM in the SSS will sediment at the above conditions.

The method of the present invention is applicable to all 2DM, which are commonly known and presently expected to encompass more than at least 700 chemical entities. It is understood by those skilled in the art that because it is the physical properties and the lack of solubility that dominates the emulsion and suspension properties of 2DM, the present invention is not limited to any specific atoms, alloys or compounds but applies to all 2DM alternatives, many of which have already been successfully synthesized. For a review and list see Mounet et al., Nature Nanotechnology, 13: 246-252, 2018, including supplemental information, 1-274, all of which is hereby incorporated by reference). For example, 2DM for practicing the present invention are selected from the group consisting of (i) graphene and its derivatives; (ii) black phosphorous; (iii) hexagonal boron nitride; (iv) transition metal dichalcogenides consisting of a transition metal and a group VI element, for example $NiTe_2$, $VSe_2$, $WTa_2$, $TcS_2$, $TaS_2$, $RhTe_2$, $ReSe_2$, ReS2, $PdTe_2$, $HfS_2$, $NbS_2$, $NbSe_2$, $NbTe_2$, $TaSe_2$, $WS_2$, $WSe_2$, $MoS_2$, $MoSe_2$, and $MoTe_2$; (v) layered metal carbides and nitrides (MXenes), for example, $Ti_3C_2$ and $Nb_4C_3$; (vi) group III-VI and group IV-VI layered compounds, for example, InSe, $In_2Se_3$, GaSe, GeSe, SnSe, $SnSe_2$, $SnS_2$, SnS; (vii) quintuple layered materials (consisting of 5 atom layers along the z-direction; such as $Bi_2Se_3$, $Bi_2Te_3$, and $Sb_2Te_3$); and (viii)mica.

In a further aspect, the present invention is also directed to a deep metastable emulsion (DME) of two-dimensional materials (2DM) and a sterically stabilized suspension (SSS) of two-dimensional materials (2DM) prepared/obtained or obtainable by a method as described herein.

In one embodiment the invention reads on a deep metastable emulsion (DME) of two-dimensional materials (2DM) or a sterically stabilized suspension (SSS) of two-dimensional materials (2DM) of the invention, wherein the 2DM particles in the DME or the SSS essentially do not sediment at room temperature (e.g. 16-28, optionally about 20 °C) and atmospheric pressure for at least 24, 36 or 72 hours if not further manipulated.

Because different 2DM have different electronic and/or mechanical properties, e.g. graphene is a conductor, $WSe_2$ is a semiconductor and h-BN is an insulator, inks made from DME or SSS comprising 2DM have utility for producing composites and electronic devices. Graphene is usually added to composites to improve their electrical and thermal conductivities. Graphene and other 2DM are also added to structural composites (cementitious, ceramic, metallic, and polymeric) to improve their mechanical properties.

Therefore, in a third aspect, the present invention is directed to the use of a deep metastable emulsion (DME) of two-dimensional materials (2DM) or a sterically stabilized suspension (SSS) of two-dimensional materials (2DM) of the invention for the production of products selected from the group consisting of inks, in particular inks for printed electronics, 3D printing inks, electronic devices, optoelectronic devices, excitonic devices, structural composites, coatings, paintings, conductive electrodes, batteries, supercapacitors, solar cells, fuel cells, detectors, sensors, drug delivery devices, thermal conductors, thermal barriers, and electromagnetic shieldings.

In one embodiment the DME and SSS of the invention are used for the production of electronic devices, in particular electronic devices comprising conductors, semiconductors or insulators made from DME and/or SSS.

In the following a non-limiting selection of specific solvent systems for practicing the present invention is described, which is not intended to be interpreted as limiting the scope of the present invention. Other solvent systems can be used as long as the requirements for miscibility and immiscibility as stated herein are met.

For example, the solvent **X** (for exfoliation) for the herein-described methods for preparing a DME used in step **(I)** for dispersing a 2DM, wherein solvent X comprises water or is miscible in water, may optionally be selected from the group consisting of acetone-water, ethanol-water, isopropanol-water, dimethyl sulfoxide (DMSO), dimethylformamide (DMF), 1,3-dimethyl-2-imidazolidinone (DMI), N,N-dimethylacetamide (DMA), 4-hydroxybutanoic acid lactone (GBL), dihydrolevoglucosenone (Cyrene), and N-Methyl-2-Pyrrolidone (NMP), optionally NMP or 70-30 vol.% water/EtOH.

For example, the solvent **Y** for the herein-described methods for preparing a DME used in step **(II.1)** for adding and mixing, wherein solvent Y is immiscible in water and miscible in solvent X, may optionally be selected from the group consisting of ethyl acetate, butyl acetate, propyl acetate, cyclohexane, pentane, hexane, heptane, octane, xylene, tetralin, toluene, and mixtures thereof, for example, toluene benzene, carbon tetrachloride, chloroform, 1,2-dichloroethane, dichloromethane, diethyl ether, dimethyl formamide, methyl-tert-butyl ether, 2,2,4-trimethylpentane, chlorobenzene, dichlorobenzene, trichlorobenzene, diiodomethane, diisopropyl ether, methyl ethyl ketone (MEK), and trichloroethylene.

For example, the solvents **Y** and **T** for the herein-described methods for preparing a DME used in step **(II.2)** for adding and mixing, wherein at least one of solvents X and/or Y comprises further solvent T, wherein solvent T is miscible in solvent X and solvent Y, and solvent Y is immiscible in water and immiscible in solvent X but wherein solvent Y in combination with solvent T is miscible in solvent X, may optionally be selected for Y from the group consisting of pentane, heptane, hexane, nonane, decane, and longer chain alkanes; and for T selected from the group consisting of ethanol, isopropyl alcohol, ethyl acetate, butyl acetate, and related compounds.

For example, the solvent **X** comprising or miscible in further solvent **Z** for the herein-described methods for preparing a DME used in step **(I)** for dispersing a 2DM may optionally be selected for X from the group consisting of acetone-water, ethanol-water, isopropanol-water, dimethyl sulfoxide (DMSO), dimethylformamide (DMF), 1,3-dimethyl-2-imidazolidinone (DMI), N,N-dimethylacetamide (DMA), 4-hydroxybutanoic acid lactone (GBL), dihydrolevoglucosenone (Cyrene), and N-Methyl-2-Pyrrolidone (NMP), optionally NMP or 70-30 vol.% water/EtOH\and for Z from the group consisting of water, acetone-water, ethanol-water, isopropanol-water, dimethyl sulfoxide (DMSO), dimethylformamide (DMF), 1,3-dimethyl-2-imidazolidinone (DMI), N,N-dimethylacetamide (DMA), 4-hydroxybutanoic acid lactone (GBL), dihydrolevoglucosenone (Cyrene), and N-Methyl-2-Pyrrolidone (NMP), optionally water.

For example, the solvent **Y** for the herein-described methods for preparing a DME used in step (II.1) for adding and mixing, wherein solvent Y is immiscible in solvent Z and miscible in solvent X, may optionally be selected from the group consisting of ethyl acetate, butyl acetate, propyl acetate, cyclohexane, pentane, hexane, heptane, octane, xylene, tetralin, toluene, and mixtures thereof, for example, toluene benzene, carbon tetrachloride, chloroform, 1,2-dichloroethane, dichloromethane, diethyl ether, dimethyl formamide, methyl-tert-butyl ether, 2,2,4-trimethylpentane, chlorobenzene, dichlorobenzene, trichlorobenzene, diiodomethane, diisopropyl ether, methyl ethyl ketone (MEK), trichloroethylene.

For example, the solvents **Y** and **T** for the herein-described methods for preparing a DME used in step **(II.2)** for adding and mixing, wherein at least one of solvents X and/or Y comprises further solvent T, wherein solvent T is miscible in solvent X and solvent Y, and solvent Y is immiscible in solvent Z and immiscible in solvent X but wherein solvent Y in combination with solvent T is miscible in solvent X, may optionally be selected for Y from the group consisting of pentane, heptane, hexane, nonane, decane, and longer chain alkanes; and for T selected from the group consisting of ethanol, isopropyl alcohol, ethyl acetate, butyl acetate, and related compounds.

In the following, exemplary combinations of 2DM, solvents X and Y for practicing method A, i.e. steps (I) and (II.1), of the present invention for preparing DME and SSS products are listed:

TABLE 1

| 2DM | Solvent X (step I) | Water-immiscible Solvent Y (step II.1) |
|---|---|---|
| Graphene | NMP | Toluene |
| Graphene | Cyrene | Tetralin |
| Graphene | GBL | Xylene |
| Graphene | 30 / 70 vol.% isopropanol/water | Toluene |
| MoS2 | NMP | Butyl acetate |
| MoS2 | NMP | Xylene |
| WSe2 | NMP | Toluene |
| WSe2 | GBL | Toluene |
| WSe2 | DMA | Toluene |
| MoS2 | DMA | Propyl acetate |
| h-BN | NMP | Toluene |
| h-BN | DMA | Xylene |
| h-BN | GBL | Cyclohexane |

The total amount of water in the resulting three-phase system comprising the DME phase is equal to or more than the critical amount needed for the formation of a two-phase system comprising the same solvents but without the 2DM.

The following TABLE 2 shows exemplary solvent and volume combinations of 2DM, solvents X and Y and water for practicing method A, steps (I), (II.1) and (III) of the present invention for preparing DME and SSS products.

TABLE 2

| 2DM | Solvent X (step IA) | Water-immiscible solvent Y (step IIA. 1) | Solvent (IIIA) | Ratio of about X/Y/H$_2$O* |
|---|---|---|---|---|
| Graphene | NMP | Toluene | H$_2$O | 1/1/0.2 |
| Graphene | NMP | Butyl acetate | H$_2$O | 1/1/0.24 |
| Graphene | NMP | Propyl acetate | H$_2$O | 1/1/0.36 |

(continued)

| 2DM | Solvent X (step IA) | Water-immiscible solvent Y (step IIA.1) | Solvent (IIIA) | Ratio of about X/Y/$H_2O$* |
|---|---|---|---|---|
| Graphene | NMP | Amyl acetate | $H_2O$ | 1/1/0.18 |
| Graphene | NMP | Xylene | $H_2O$ | 1/1/0.15 |
| Graphene | NMP | Cyclohexane | $H_2O$ | 1/1/0.065 |
| Graphene | NMP | Anisole | $H_2O$ | 1/1/0.38 |
| *(critical minimal $H_2O$ amounts) | | | | |

The ratio between solvent X (for exfoliation), the immiscible solvent Y and water does not have a significant effect on the quality of the DME phase. The water content should optionally only be higher than or equal to the critical value for phase separation as described above. However, when the water content is equal or slightly higher than this critical value, the formation of the DME is slow. Increasing the water content speeds up the DME formation process but makes the solvent recovery step more energy consuming (the solvent X (for exfoliation) can be recycled). Hence, depending on the desired speed, one can choose the water to exfoliation/immiscible solvent ratios in wide ranges.

In a further embodiment, the present invention relates to DME- and SSS solvent/2DM combinations selected from the group consisting of TABLE 3:

TABLE 3

| | | | |
|---|---|---|---|
| Graphene | NMP | Toluene | $H_2O$ |
| Graphene | Cyrene | Tetralin | $H_2O$ |
| Graphene | GBL | Xylene | $H_2O$ |
| Graphene | 30 / 70 vol.% isopropanol/water | Toluene | $H_2O$ |
| $MOS_2$ | NMP | Butyl acetate | $H_2O$ |
| $MOS_2$ | NMP | Xylene | $H_2O$ |
| $WSe_2$ | NMP | Toluene | $H_2O$ |
| $WSe_2$ | GBL | Toluene | $H_2O$ |
| $WSe_2$ | DMA | Toluene | $H_2O$ |
| $MOS_2$ | DMA | Propyl acetate | $H_2O$ |
| h-BN | NMP | Toluene | $H_2O$ |
| h-BN | DMA | Xylene | $H_2O$ |
| h-BN | GBL | Cyclohexane | $H_2O$ |
| Graphene | NMP | Butyl acetate | $H_2O$ |
| Graphene | NMP | Propyl acetate | $H_2O$ |
| Graphene | NMP | Amyl acetate | $H_2O$ |
| Graphene | NMP | Xylene | $H_2O$ |
| Graphene | NMP | Cyclohexane | $H_2O$ |
| Graphene | NMP | Anisole | $H_2O$ |

**Figures**

Fig. 1      is a graph showing the amplitude sweep results of ink 1 (Example 1) and its successive dilutions.

Fig. 2      is a graph showing the amplitude sweep results of ink 2 and its successive dilutions.

**Fig. 3**        is a graph showing the frequency sweep test results for ink 1.

**Fig. 4**        is a graph showing the frequency sweep test results for reference ink 2.

**Fig. 5**        is a graph showing the flow curve for ink 1 (6.5 wt.%).

**Fig. 6**        is a graph showing the shear stress and viscosity changes upon forward and backward shear rate sweeps of ink 1.

**Fig. 7**        is a graph showing the shear stress and viscosity changes upon forward and backward shear rate sweeps of ink 1 for the second time (after the experiment of figure 6-17, ink 1 was left at rest for 30 mins to recover its structure and the figure 6-17 test was repeated).

**Fig. 8**        is a graph showing the amplitude sweep results of graphene ink in decane and its successive dilutions.

**Fig. 9**        is a graph showing the frequency sweep test results for graphene ink in decane and its successive dilutions.

**Fig. 10**      is a graph showing the flow curve of hBN ink (24 wt.%).

**Fig. 11**      is a graph showing the amplitude sweep results of hBN ink (24 wt.%).

**Fig. 12**      is a graph showing the frequency sweep results of hBN ink (24 wt.%).

**Fig. 13**      is a graph showing the flow curve of $MoS_2$ ink (32 wt.%).

**Fig. 14**      is a graph showing the amplitude sweep results of $MoS_2$ ink (32 wt.%).

**Fig. 15**      is a graph showing the frequency sweep results of $MoS_2$ ink (32 wt.%).

**Figs. 16a-c**  are photographs of (a) flocculated graphene in the middle phase of a DME in a separation funnel (with the same compositional ratios of example 1); (b) a left glass tube with an NMP-toluene mixture (1.5ml-1.5ml) before addition of water, and a right glass tube with DME formation after addition of water (0.3 ml), and (c) an ultrahigh viscosity vdW (van der Waals) graphene ink on a spatula.

**Figs. 17a-d**  are photographs of SEM images with different magnifications of a "hexagonal boron nitride - zinc oxide nanowires" composite produced by the method of the present invention.

**Fig. 18**      is a schematic drawing indicating the transition (middle part) of 2DM concentrates (upper part) by mild oriented shearing forces ("rubbing") for homogenizing the gel structure in an SSS (lower part).

## Examples

In the following the present invention will be illustrated by way of representative examples none of which are to be interpreted as limiting the invention beyond the scope of the appended claims.

## Example 1 - Preparation of DME, SSS and ink 1 (graphene / NMP-toluene-water)

DME 1 was prepared as follows. 50 g graphite were added to 1 L NMP (exfoliation solvent) and sonicated in an ultrasonic bath for 18 hours to prepare graphene. The obtained suspension was centrifuged for 30 min at 5000 RCF (relative centrifugal force). The supernatant was collected (having a concentration of 0.08 wt.%) and added into a 2 L separation funnel. 500 mL toluene were added to the separation funnel and mixed with the NMP-graphene dispersion. 500 mL water were added which led to immediate formation of the deep metastable emulsion (DME) as a middle phase in a three-phase system.

SSS1 was prepared as follows. The funnel valve of the above DME three-phase system was opened and the water rich bottom phase was separated. The middle phase was collected and repeatedly washed with ethanol (centrifugation-assisted). The middle phase was washed (centrifugation-assisted) two more times with NMP and the final DME product of the centrifuge (sediments) was collected and homogenized with a three-roll mil for low force shearing (Changzhou Zili Chemical Machinery Co.,Ltd., SD50, China, one pass). The sediments comprise the stable milled, gel-like SSS product, designated ink 1) and where separated for structural analysis.

## Example 2 - Preparation of reference ink 2 (graphene / NMP)

DME 2 was prepared as follows. 40 g graphite were added to 50 ml NMP (exfoliation solvent) and treated in a high shear mixer to prepare graphene (Changzhou Zili Chemical Machinery Co.,Ltd., SD50, China, one pass) for 30 hours. The obtained viscous liquid was centrifuged at 12500 RCF for 30 min. to obtain the highest possible solid loading. The sediments were mixed with a spatula and homogenized by a three-roll mill (Changzhou Zili Chemical Machinery Co.,Ltd., SD50, China, one pass).

## Example 3 - Characterization of ink 1 and reference ink 2

The rheological properties of ink 1 and reference ink 2 were studied and afterwards they were successively diluted (by addition of NMP) and re-homogenized with a three-roll mill (Changzhou Zili Chemical Machinery Co., Ltd.,

SD50, China, one pass). The initial concentrations of ink 1 and reference ink 2 were 6.5 wt.% and 38 wt.%, respectively. Gel points of these two inks were observed at 1 wt.% and 29 wt.%, respectively.

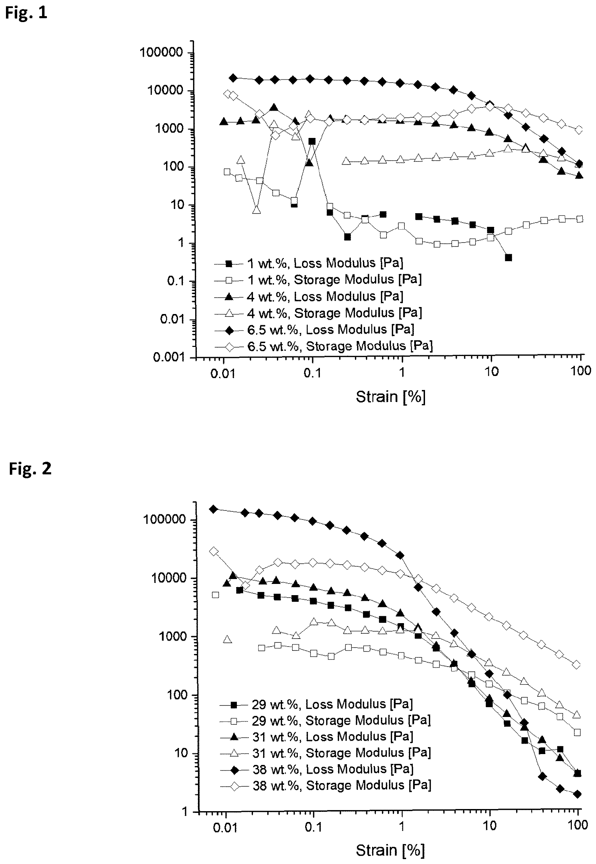

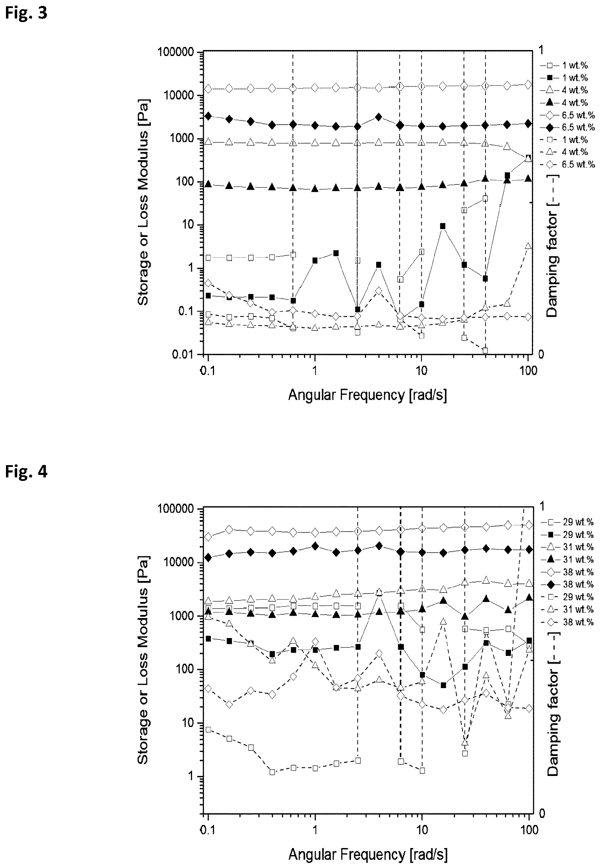

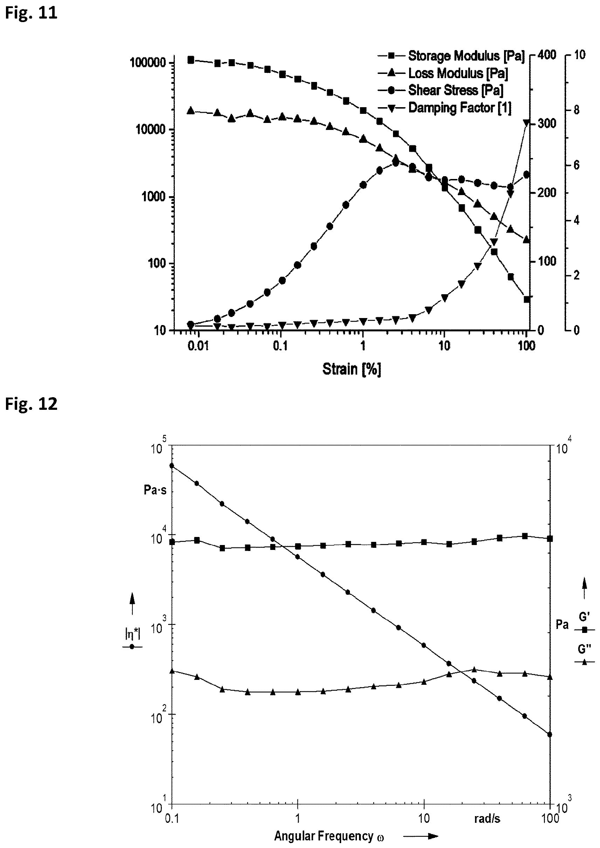

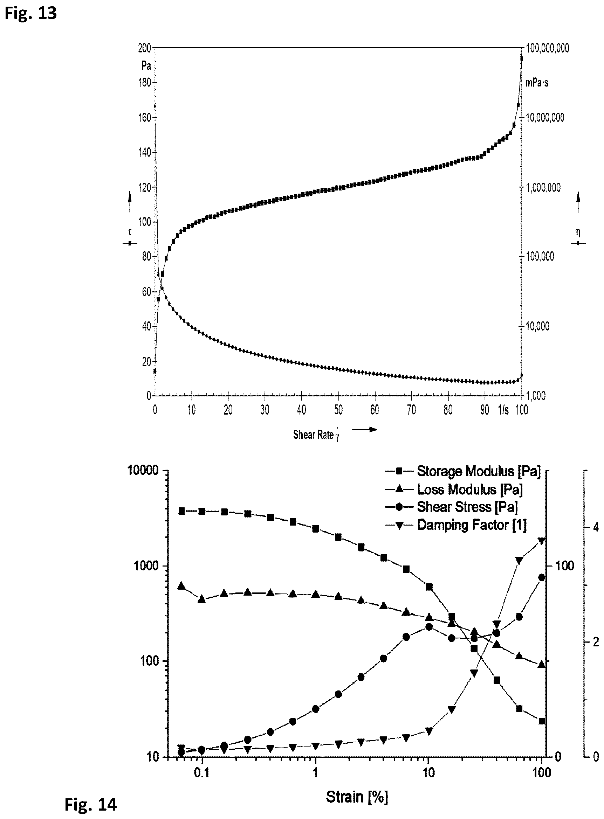

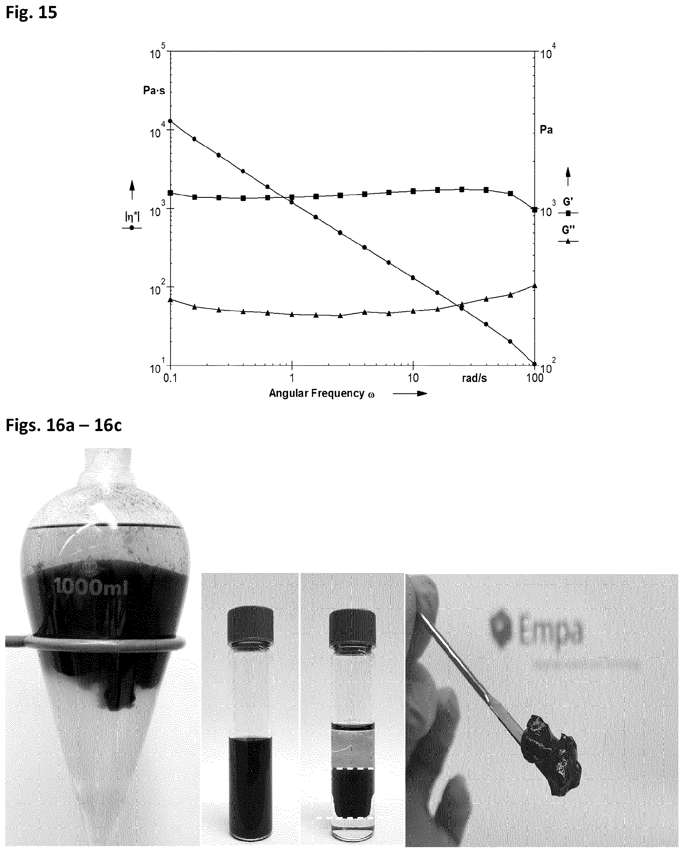

The results are graphically shown in figs 1-12 and 2-13. According to the comparison of figs. 1-12 and 2-13, and even without considering its 5 times lower solid content over reference ink 2, ink 1 (produced according to the invention) has at least one order of magnitude bigger $\gamma_{cr}$ (2% in contrast to less than 0.1%) and only one order of magnitude smaller G' than reference ink 2 (in its highest concentration). Consequently, ink 1 has an at least 10 times larger cohesive energy density than reference ink 2 (the critical shear strain has a power of two in the cohesive energy density formula). The gel point and instability of the system is shown in figs. 1-12 to 4-15 (for 1 wt.% and 29 wt.% dilutions of ink 1 and reference ink 2, respectively. Figs. 14 and 15 show the frequency sweep test results for ink 1 and reference ink 2 (and their dilutions). Frequency sweeps generally serve the purpose of describing the time-dependent behavior of a sample in the non-destructive deformation range. High frequencies are used to simulate the short-time and low frequencies simulate the long-time (at rest) behavior of a gel. In practice, frequency sweeps are proven methods for gathering information about the inner structure and the long-term stability of dispersions. If the particles are strongly associated, the storage modulus (G') should be greater than the loss modulus (G") and both should almost be independent of frequency. The lower the damping factor at low frequencies will show the most viscoelastic solid-like characteristics, which will be inherently a more stable system.

For ink 1, 6.5 wt.% and 4 wt.% concentrations show superb stability with a very low damping factor value while 1 wt.% concentration, which is below the gel point, is not stable and the damping factor rises to above 1 at some frequencies. For reference ink 2, even though that it is stable at 38 wt.% and 31 wt.% concentrations in the whole frequency range, these show a higher damping factor. The 29 wt.% dilution is an unstable gel which can correspond to the gel point of that system.

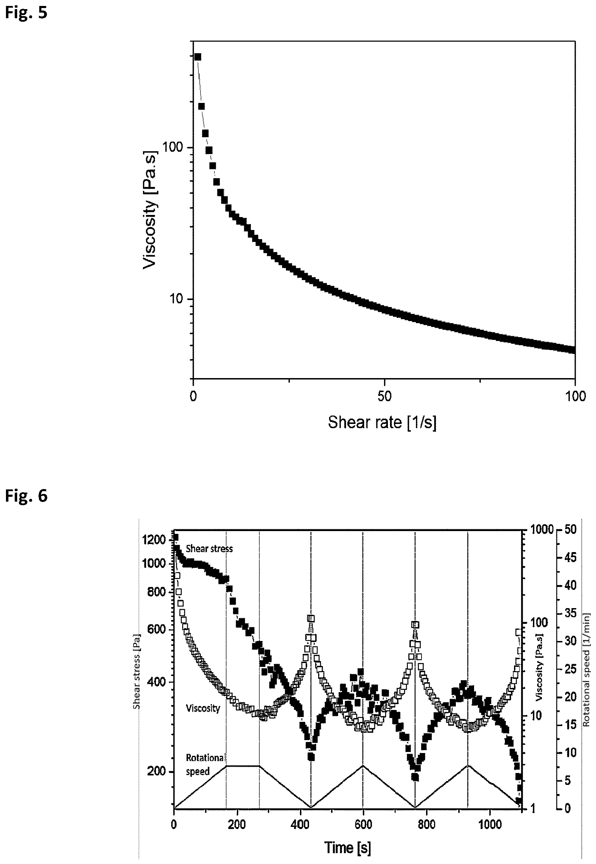

Figs. 5-16 shows the flow curve (viscosity-shear rate dependence) of ink 1 (6.5 wt.%), which has a viscosity of about 400,000 cP at a 0.001 s$^{-1}$ shear rate. The viscosity drops to 2000 cP at 100 s$^{-1}$ (shear thinning). Since every printing method requires specific rheological properties, one can simply adjust them by diluting the ink 1 from 6.5 wt.% to gel point (1 wt.%). As mentioned above, the maximum loading (6.5 wt.% in this case) and gel point values are dependent on the starting graphite flake size and exfoliation process results and one should expect variations in different processing conditions, but the overall behavior will be the same.

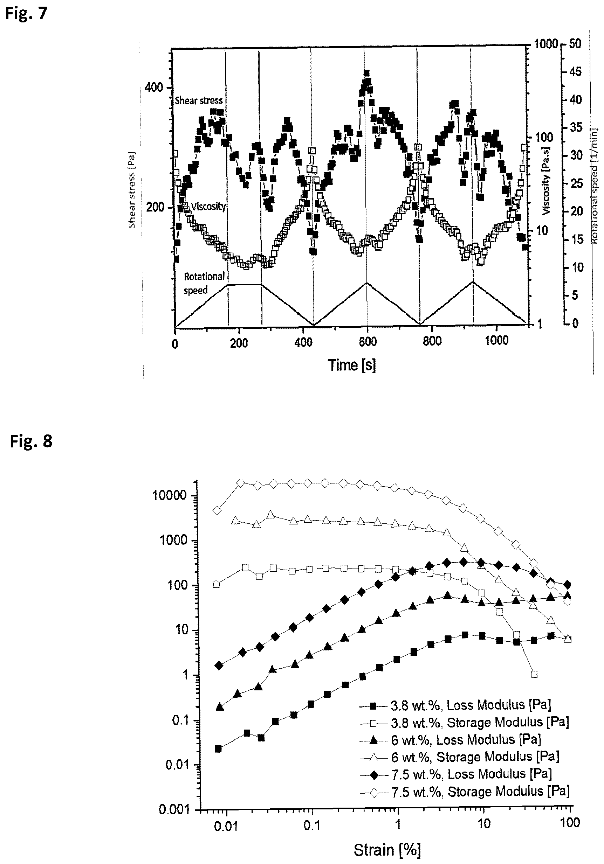

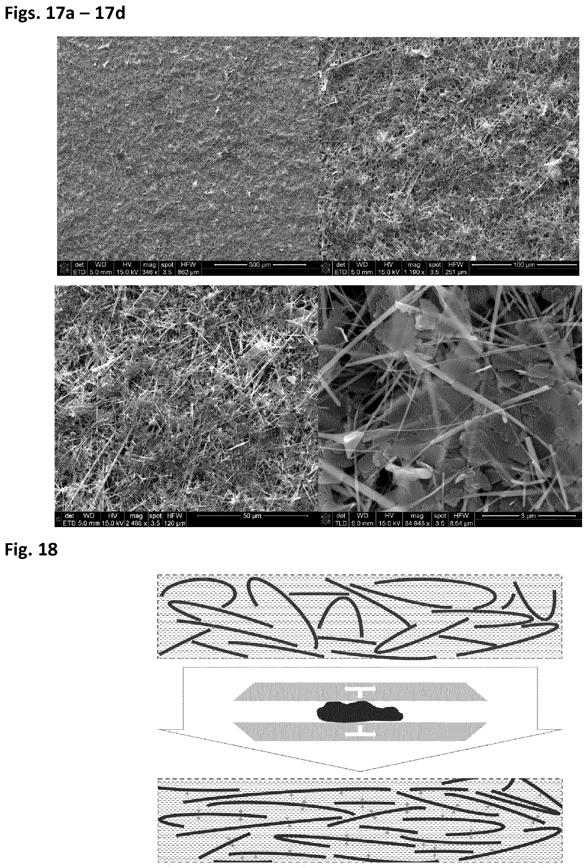

It was demonstrated that after a short and gentle "rubbing" between the plates of a rheometer (25 mm flat discs, gap size 0.2 mm, maximum angular speed of 7 min$^{-1}$ and under 1 N normal force for ~250s) the rheological properties are stabilized (see Figs. 6 - 6-17). An initial and irreversible big viscosity drop was observed which can be attributed to the alignment of the gel structure. The viscosity variations (by shear rate) were stabilized over repetitive back and forth shear rate sweeps. Even after allowing ink 1 to rest for 30 min, and repeating the test (for Fig. 7-18), the viscosity level and stress levels were in the same range (not recovered to the high initial level).

**Example 4 - Preparation of ink 2 (graphene / decane)**

To further demonstrate the unexpected and superior properties of the inventive homogenous, 1-phase and stable SSS-based ink (gel) system and to demonstrate the wide range of suitable solvent systems for preparing DME and SSS products, a graphene ink was prepared in decane which is an unconventional solvent for additive-free graphene inks, because it is impossible to disperse graphene in decane. The rheological properties and gel stability test results (frequency sweep) are shown in Figs. 8-19 and 9-20. Similar to the NMP-based ink, the highest achieved concentration was 7.5 wt.% but the gel point is 3.8 wt.% which shows the lower affinity of the graphene to decane (compared to NMP, probably due to the large surface energy mismatch).

Graphene / decane-based DME, SSS and ink 2 were prepared as follows. 50 g graphite were added to 1 L exfoliation solvent NMP and sonicated in an ultrasonic bath for 18 hours. The obtained suspension was centrifuged for 30 min at 5000 RCF. The supernatant was collected (concentration of 0.08 wt.%) and added into a 2 L separation funnel. 500 mL toluene was added to the separation funnel and mixed with the NMP-graphene dispersion. 500 mL water were added leading to immediate formation of the deep metastable emulsion (DME) as a middle phase.

For preparing the SSS-based ink 2 from the DME the funnel valve was opened and the water-rich bottom phase was separated. The middle phase was collected and repeatedly washed (3 x) with ethanol (centrifugation-assisted). After centrifugation the sediments of the ethanol wash were washed with ethyl acetate (3 x). After centrifugation these sediments were washed with decane 2 more times and the final sediment products of the centrifuge were collected and homogenized by a three-roll mill. It is noted that NMP and water should be completely removed due to their immiscibility in decane.

**Example 5 - Preparation of ink 3 and 4 (boron nitride and MoS$_2$)**

To further demonstrate the unexpected and superior properties of the inventive homogenous, one-phase and stable SSS-based ink (gel) system and to demonstrate the general suitability of all two-dimensional materials (2DM) for preparing DME and SSS products, boron nitride- and $MoS_2$-based DME, SSS and inks (hBN, hexagonal boron nitride, an insulator ink, example 3; $MoS_2$, a semiconductor ink, example 4) were prepared both in NMP.

For preparing a 24 wt.% SSS-based ink of hBN in NMP (example 3) 5 g hBN powder was added to 200 ml NMP and sonicated in an ultrasonic bath for 30 hours. The obtained suspension was centrifuged for 30 min at 1000 RCF. The supernatant was collected (concentration of 0.01 wt.%) and added into a 1 L separation funnel. 50 mL toluene were added to the separation funnel and mixed with the NMP-hBN dispersion. 100 mL water were added leading to immediate formation of the deep metastable emulsion (DME) as a middle phase.

For preparing the SSS-based ink 3 from the DME the funnel valve was opened and the water-rich bottom phase was separated. The middle phase was collected and repeatedly washed with ethanol (centrifugation-assisted). The centrifugation assisted washing was repeated two more times with NMP and the final sediments were collected and homogenized by a three-roll mil.

For preparing a 32 wt.% $MoS_2$ SSS-based ink of hBN in NMP (example 4) 20 g molybdenite powder were added to 500 mL NMP and sonicated with a probe sonicator for 3 hours. The obtained suspension was centrifuged for 30 min at 3000 RCF. The supernatant was collected (concentration of 0.03 wt.%) and added to a 1 L separation funnel. 100 mL xylene were added to the separation funnel and mixed with the NMP-$MoS_2$ dispersion. Addition of 300 mL water led to the immediate formation of the deep metastable emulsion (DME) as a middle phase.

For preparing the SSS-based ink 4 from the DME the funnel valve was opened and the water-rich bottom phase was separated. The middle phase was collected and repeatedly washed with ethanol (centrifugation-assisted). The washing (centrifugation-assisted) was repeated two more times with NMP and the final products of the centrifuge (sediments) were collected and homogenized by a three-roll mil.

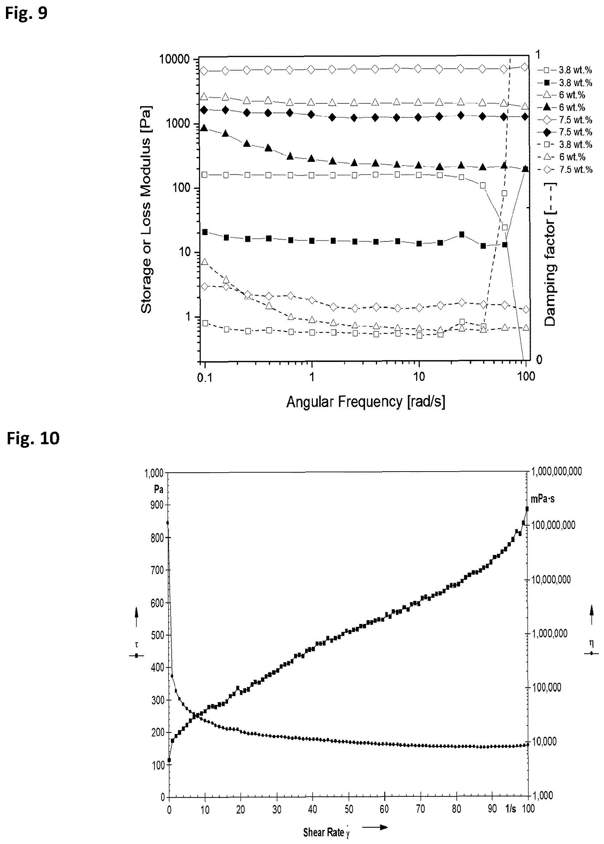

The flow curves, rheological properties and gel stability test results (frequency sweep) are shown in figures 10-21 to 15-26. Again, the obtained gels (inks 3 and 4) exhibit similar properties similar to the above graphene gels. It is noted that the high solid content of the hBN-based ink 3 is because of the poor exfoliation of this material in NMP and for $MoS_2$-based ink 4 is because of the high density of this material.

**Summary of the examples**

It has been demonstrated experimentally that the methods for the preparation of DME-, SSS- and ink products according to the present invention do not require the presence of functionalized 2DMs, surfactants and/or binders that interact with the 2DMs in these products for DME-, SSS- or ink formation and/or stability. The methods and products can be reproduced for essentially all two-dimensional materials and do not require any specific solvent system for DME- and/or SSS formation and stability. It is the differences in the solvents' solubilities that leads to the integration of the 2DM into the middle phase and to the formation of the DME in a reproducible manner. The stable DME can then be used or further processed into improved products.

**Claims**

1. A method for preparing a deep metastable emulsion (DME) of a two-dimensional material (2DM), comprising the steps of:

    (I) dispersing a 2DM in a solvent X, wherein solvent X comprises water or is miscible in water;
    (II.1) adding and mixing a further solvent Y, wherein solvent Y is immiscible in solvent Z and miscible in solvent X; or
    (II.2) adding and mixing a further solvent Y, wherein at least one of solvents X and/or Y comprises further solvent T, wherein solvent T is miscible in solvent X and solvent Y, and solvent Y is immiscible in water and immiscible in solvent X but wherein solvent Y in combination with solvent T is miscible in solvent X;
    (III) adding and mixing solvent Z if solvent X does not comprise or does not comprise enough solvent Z for DME formation;

    wherein

    c. the composition resulting from step (II.1), (II.2) or (III) forms a three-phase system having a deep metastable emulsion (DME) middle phase comprising the 2DM; and
    d. the deep metastable emulsion (DME) middle phase remains stable at room temperature and atmospheric pressure for at least 1 week.

2. The method of claim 1, wherein solvent Z is water, comprising the steps of

(I) dispersing a 2DM in a solvent X, wherein solvent X comprises water or is miscible in water;
(II.1) adding and mixing a further solvent Y, wherein solvent Y is immiscible in water and miscible in solvent X; or
(II.2) adding and mixing a further solvent Y, wherein at least one of solvents X and/or Y comprises further solvent T, wherein solvent T is miscible in solvent X and solvent Y, and solvent Y is immiscible in water and immiscible in solvent X but wherein solvent Y in combination with solvent T is miscible in solvent X;
(III) adding and mixing water if solvent X does not comprise or does not comprise enough water for DME-formation.

3. The method according to any of claims 1, comprising at least one further step selected from the group consisting of

(a) separating the DME phase (middle phase) from the one or two further phases, and/or
(b) addition of one or more solvents (mutual solvent(s)), suitable for dissolving all liquid components of the DME phase, but not suitable for re-dispersing the 2DM; and/or
(c) separating the 2DM from the homogenous solvent produced in step (b) by filtration, centrifugation and/or decanting; re-addition of the mutual solvent and its subsequent removal for further purification of the 2DM,
(c1) if the final carrier solvent for the 2DM has a higher boiling point than the mutual solvent, the 2DM obtained from step (c) is added to the desired amount of the carrier solvent and the residuals of the mutual solvent are evaporated,
(c2) if the final carrier solvent for the 2DM has a lower boiling point than the mutual solvent, the 2DM obtained from step (9) is washed by the target solvent multiple times

4. The method according to any of claims 1 to 3, comprising the further step of adjusting the concentration of the DME to obtain a gel that forms a viscous, homogenous, single phase and sterically stabilized suspension (SSS) of the 2DM from the DME phase.

5. The method according to claim 4, comprising the further step of applying an oriented low shear stress to the sterically stabilized suspension (SSS).

6. The method according to claims 4 or 5, wherein the 2DM-carrier solvent mixture of the SSS has a 2DM concentration equal or more than 1, equal or more than 5, equal or more than 20 wt.-%.

7. The method according to any of claims 4 to 6, wherein the SSS has a viscosity at room temperature in the range of 250 cP to 250000 cP, 700 cP to 10000 cP, or in the range of 2000 cP to 7000 cP.

8. The method according to any of claims 4 to 7, wherein the 2DM particles in the SSS essentially do not sediment at room temperature and atmospheric pressure for at least 24, 36 or 72 hours if not further manipulated.

9. The method according to any of claims 1 to 8, wherein the two-dimensional materials (2DM) are selected from the group consisting of

(i) graphene and its derivatives;
(ii) black phosphorous;
(iii) hexagonal boron nitride;
(iv) transition metal dichalcogenides consisting of a transition metal and a group VI element, for example $NiTe_2$, $VSe_2$, $WTa_2$, $TcS_2$, $TaS_2$, $RhTe_2$, $ReSe_2$, ReS2, $PdTe_2$, $HfS_2$, $NbS_2$, $NbSe_2$, $NbTe_2$, $TaSe_2$, $WS$, $WSe_2$, $MoS_2$, $MoSe_2$, and $MoTe_2$;
(v) layered metal carbides and nitrides (MXenes), for example, $Ti_3C_2$ and $Nb_4C_3$;
(vi) group III-VI and group IV-VI layered compounds, for example, InSe, $In_2Se_3$, GaSe, GeSe, SnSe, $SnSe_2$, $SnS_2$, SnS;
(vii) quintuple layered materials (consisting of 5 atom layers along the z-direction; such as $Bi_2Se_3$, $Bi_2Te_3$, and $Sb_2Te_3$); and
(viii) mica.

10. The method according to any of claims 1 to 9 with *proviso* that the DME and/or SSS essentially does not comprise a compound selected from the group consisting of functionalized 2DM, and additive such as surfactants, and binders that interacts with the 2DM to the extent that the compound is necessary for DME or SSS formation and/or stability.

11. A deep metastable emulsion (DME) of two-dimensional materials (2DM) obtainable by a method of any of the preceding claims.

12. A sterically stabilized suspension (SSS) of two-dimensional materials (2DM) obtainable by a method of any of the preceding claims.

13. A deep metastable emulsion (DME) of two-dimensional materials (2DM) of claim 11 or a sterically stabilized suspension (SSS) of two-dimensional materials (2DM) of claim 12, wherein the 2DM particles in the DME or the SSS essentially do not sediment at room temperature and atmospheric pressure for at least 24, 36 or 72 hours if not further manipulated.

14. Use of a deep metastable emulsion (DME) of two-dimensional materials (2DM) according to any of claims 11 or a sterically stabilized suspension (SSS) of two-dimensional materials (2DM) according to claim 12 for the production of products selected from the group consisting of inks, in particular inks for printed electronics, 3D printing inks, electronic devices, structural composites, coatings, paintings, conductive electrodes, batteries, supercapacitors, solar cells, fuel cells, detectors, sensors, drug delivery devices, thermal conductors, thermal barriers, and microwave shields.

15. Use of a deep metastable emulsion (DME) of two-dimensional materials (2DM) according to claim 11 or a sterically stabilized suspension (SSS) of two-dimensional materials (2DM) according to claim 12 for the production of electronic devices, in particular electronic devices comprising conductors, semiconductors or insulators made from DME and/or SSS.

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

**Fig. 11**

**Fig. 12**

**Fig. 13**

**Fig. 14**

**Fig. 15**

**Figs. 16a – 16c**

**Figs. 17a – 17d**

**Fig. 18**

Europäisches
Patentamt

European
Patent Office

Office européen
des brevets

# EUROPEAN SEARCH REPORT

**Application Number**

EP 20 15 0937

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 110 642 246 A (PETROCHINA CO LTD) 3 January 2020 (2020-01-03) | 11-15 | INV. C09D5/02 |
| A | * claims 1-3; figure 1; examples 1-4 * | 1-10 | C09D5/24 C09D7/40 |
| X | CN 104 591 165 A (JIANGNAN GRAPHENE RES INST; UNIV SOUTHEAST) 6 May 2015 (2015-05-06) | 11-15 | C09D11/52 H01B1/24 C01B32/19 |
| A | * claims 1-7; examples 1-8 * | 1-10 | |
| X | CN 110 550 620 A (CHINA PETROLEUM & CHEM CORP ET AL.) 10 December 2019 (2019-12-10) | 11-15 | |
| A | * paragraphs [0002], [0003]; examples 1-11 * | 1-10 | |
| X | JIANTONG LI ET AL: "A simple route towards high-concentration surfactant-free graphene dispersions", CARBON., vol. 50, no. 8, 10 March 2012 (2012-03-10) , pages 3113-3116, XP055286504, GB ISSN: 0008-6223, DOI: 10.1016/j.carbon.2012.03.011 | 11-15 | |
| | | | **TECHNICAL FIELDS SEARCHED (IPC)** |
| A | * figures 1-3 * | 1-10 | C09D C08K H01B C01B |
| X | US 2016/326386 A1 (TOYSERKANI EHSAN [CA] ET AL) 10 November 2016 (2016-11-10) | 11-15 | |
| A | * claims 1-17 * | 1-10 | |
| X | WO 2019/089810 A1 (UNIV CONNECTICUT [US]) 9 May 2019 (2019-05-09) | 11-15 | |
| A | * claims 1-17; figures 1-12; example 1 * | 1-10 | |
| X | WO 2018/087542 A1 (UNIV YORK [GB]) 17 May 2018 (2018-05-17) | 11-15 | |
| A | * page 4, lines 10-21; examples 4,5 * | 1-10 | |

The present search report has been drawn up for all claims

| Place of search | Date of completion of the search | Examiner |
|---|---|---|
| Munich | 25 June 2020 | Schmitt, Johannes |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 15 0937

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2020

| Patent document cited in search report | | Publication date | Patent family member(s) | Publication date |
|---|---|---|---|---|
| CN 110642246 | A | 03-01-2020 | NONE | |
| CN 104591165 | A | 06-05-2015 | NONE | |
| CN 110550620 | A | 10-12-2019 | NONE | |
| US 2016326386 | A1 | 10-11-2016 | NONE | |
| WO 2019089810 | A1 | 09-05-2019 | NONE | |
| WO 2018087542 | A1 | 17-05-2018 | NONE | |

EPO FORM P0459

For more details about this annex : see Official Journal of the European Patent Office, No. 12/82

**EP 3 848 420 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20170081537 A1
- US 20180086932 A1
- WO 2017035193 A1

### Non-patent literature cited in the description

- **MOUNET et al.** *Nature Nanotechnology,* 2018, vol. 13, 246-252
- **SUN et al.** *Journal of Materials Chemistry A,* vol. 4 (18), 6886-6895
- **PAN et al.** *Nature communications,* vol. 9 (1), 5197
- **FINN et al.** *Journal of Materials Chemistry C,* vol. 2 (5), 925-932
- *J. Am. Chem. Soc.,* 2010, vol. 132 (50), 17661-17663
- *The Journal of Physical Chemistry Letters,* vol. 4 (8), 1347-1351
- *Langmuir,* 2008, vol. 24 (14), 7565-7572